# EUROPEAN PATENT APPLICATION

(11) **EP 4 810 158 A1**
(43) Date of publication of application: **23.09.2026**
(21) Application number: 26164038.7
(22) Date of filing: 11.03.2026
(51) Int. Cl.: B01L 3/02

(54) **MULTIPLE PORT PIPETTE TIP**

(30) Priority: 18.03.2025 US 202563773904 P; 23.02.2026 US 202619547417
(71) Applicant: Scientific Plastic Products, Inc., Oceanside, California 92054 (US)
(72) Inventor: Ellis, Samuel A., Oceanside, 92054 (US); Landaverde, Elio, Oceanside, 92054 (US); Caustill, Joseph S., Oceanside, 92054 (US); Hingorani, Kishan G., Oceanside, 92054 (US)
(74) Representative: CMS Cameron McKenna Nabarro Olswang LLP

(57) **Abstract**

The disclosed multiple port pipette tip comprises four port adapters releasably engageable automated pipette system shafts. The adapters each include gas permeable membranes and are collectively connected to an elongate tubular body to form a fluid cavity and an end opening to form a pipette tip to engage a sample fluid. The gas permeable membranes prevent sample liquid from contaminating the pipette system shafts. The adapters allow the multiple port pipette tip to draw, retain, and dispense a greater volume than that of a standard single port pipette tip.

## Description

### CROSS-REFERENCE TO RELATED APPLICATIONS

The present application claims the benefit of U.S. Provisional Application No. 63/773,904, filed March 18, 2025, the contents of which are expressly incorporated herein by reference.

### STATEMENT RE: FEDERALLY SPONSORED RESEARCH/DEVELOPMENT

Not Applicable

### BACKGROUND

### 1. Technical Field

The present disclosure generally relates to a pipette tip for pipetting fluid, and more particularly, to a single pipette tip configured to be used with multiple pipetting shafts to handle larger amounts of fluid.

### 2. Related Art

Utilizing a pipette for transferring a known amount of fluid from one vessel to another is well known in the art. There are several different types of pipettes known in the art such as Pasteur pipettes, volumetric pipettes, serological pipettes, and micropipettes, one of the most popular being micropipettes and variations thereof. Micropipettes are mechanical instruments used in laboratories to accurately measure and transfer minute volumes. Micropipettes draw a precise volume of fluid into their disposable tips by using air displacement. In most manual micropipettes, when the plunger is depressed to the first stop, the internal piston is moved to a first position, displacing a set volume of air to draw up the exact amount of fluid needed when the plunger is released. After releasing said plunger, the fluid is drawn into and held within the disposable tip, allowing for easy transport of the fluid within. When the fluid has been transported and is ready to be dispensed, the plunger is depressed to the second stop, the air within the micropipette pushing the fluid out of the disposable tip. Though manual micropipettes are well known in the art and are used in laboratories all over the world, there are several known limitations associated with manual micropipettes. First, manual micropipettes traditionally only have one channel, one piston, and are capable of holding only one disposable tip, meaning that only one fluid sample may be pipetted at a time. Many experiments, especially in the fields of microbiology and biochemistry, deal with tens to hundreds of samples requiring excessive manpower to pipette each and every sample necessary to complete experiments. Due to this limitation, manual multichannel pipettes have been developed, allowing for multiple fluid samples to be pipetted simultaneously using a single plunger. Manual multichannel pipettes increase efficiency, eliminating the extra time required to pipette each fluid sample individually, but manual multichannel pipettes share a limitation with manual micropipettes; this limitation being that they are both manual and require a human to manually depress the plunger to pipette the fluid samples. Due to this limitation, both single channel and multichannel automated pipetting systems have been developed and are well known in the art.

Automated micropipettes share the same mechanism of air displacement used in manual micropipettes, the largest difference between the two being that automated micropipettes have a motorized piston to create the air displacement without the need for manual depression of a plunger. The two most common types of automated micropipettes are automated devices and automated systems. Automated devices require a human to hold, move, and operate the automated micropipette, while automated systems are standalone devices that pipette, move, and dispense fluid samples without the need for a constant human operator.

Most manual micropipettes, multi-channel micropipettes, and automated micropipettes have an adjustable volume capacity, but typically the volume capacity ranges from 0.1 to 1000 µL per channel. While each manual micropipette, multi-channel micropipette, and automated micropipette have their own unique volume capacity range, one limitation associated with automated pipetting systems in particular, is their inability to be used with larger quantities of fluid. Due to the cost, laboratories that have automated pipetting systems are often high-volume, high-output operations, meaning that the upper limit on these systems can put a burden on the resources needed to carry out operations. The other types of pipettes mentioned, such as Pasteur pipettes, volumetric pipettes, and serological pipettes may allow for larger volumes of fluid to be used when compared to automated pipetting systems, but are most often single channel and most often require manual operation, causing them to not be feasible alternatives to automated pipetting systems.

Specialty automated pipetting systems, such as the Dynamic Devices Lynx 24 VVP Pipetting Tool or Dynamic Devices Lynx 24 ST Pipetting Tool, each offered by Dynamic Devices LLC of Wilmington DE, allows for single channel pipetting up to 5000 µL or 5 mL when standard pipette tips are employed. However, some laboratories or production facilities would benefit from pipettes having larger capacities. Because automated pipetting systems are expensive and intensive to develop, having a higher capacity pipette alternative in the form of a specialized disposable pipette tip that utilizes the automating pipetting systems currently on the market is more cost and space effective for the laboratories that would use them. Thus, there is a need in the art for a pipette tip that uses available automated pipetting systems to increase the volume able to be pipetted by a single pipette tip, without having to modify the automated pipetting system.

### BRIEF SUMMARY

In accordance with an embodiment of the present disclosure described herein, there is provided a multiple port pipette tip adapted for working with fluid volumes of samples that are greater than standard pipette tips and also involves a related method of use. The multiple port pipette tip is adapted for connection to four automated pipette system shafts and includes four port adapters connected to an elongate tubular body to form a fluid cavity and an end opening to engage a sample fluid wherein each port adapter includes a gas permeable membrane for preventing sample liquid from contaminating the pipette system shafts. The pipetting negative or positive pressure is provided by the automated pipette system shafts to allow the uptake of fluid into the pipette tip by providing negative pressure through the ports and through a pipette tip opening that is submerged in a fluid sample of a well plate. Once the pipette tip is withdrawn from the well plate and positioned over a second well plate, the pipette system shaft applies positive pressure and allows the pipette tip to deposit fluid into a second well plate.

More specifically, the multiport pipette tip disclosed comprises a top end connectable to the ports of a standard automated system having downwardly extending shafts. The shafts provide the negative pressure and positive pressure to the pipette tip to allow pipetting of sample fluids. Rather than a single port adapter being attached to a single system shaft, the disclosed pipette has four upwardly extending adapters to connect with the shafts such that the four shafts cumulatively provide negative and positive pressure to the pipette tip. Each of the adapters are in fluid communication with an elongate tubular body of the pipette tip at the top or proximal end and the body has a tapered bottom or distal end having a small opening for uptake or dispensing of sample fluid. The four ports are coupled to a junction or platform positioned between the tubular body and the adapters, and the platform has openings to allow the passing of gas or airflow to provide negative or positive pressure. Gas permeable membranes are positioned in the upwardly extending adapters for preventing sample liquid from migrating up the adapters, however, the membranes are gas permeable to allow necessary airflow from the shafts, through the adapters, and into the cavity of the tubular body of the pipette tip.

The elongate tubular body has a proximal end with an opening and a distal tapered end with an opening. The proximal end opening of the elongate tubular body is generally circular and is of a first diameter, and the distal end opening is generally circular and of a second diameter. The second diameter of the distal end opening is smaller than the first diameter of the proximal opening.

The platform has a proximal face, an opposed distal face, and openings formed within. The distal face is coupled to the proximal end of the tubular body such that the openings of the platform are in fluid communication with the opening of the distal end of the tubular body. The center of the platform is recessed, defining a recessed face in which the plurality of openings are formed within. The elongate tubular body is coupled to the distal face of the platform via either threading on the elongate tubular body surrounding the proximal end opening and complementary threading integrally formed within the platform around the perimeter of the recessed face, or via sonic welding.

The generally cylindrical protrusions or adapters each have a proximal end with an opening and a distal end with an opening. The distal end of each generally cylindrical protrusion is coupled to the proximal face of the platform, such that the opening of each distal end of the protrusions is in fluid communication with the platform opening or openings, the generally cylindrical protrusions being arranged to from an array of four. The distal end of each generally cylindrical protrusion is coupled to the proximal face of the platform via either integrally forming the distal end to the proximal face, or via sonic welding. The opening of the proximal end of each cylindrical protrusion is adapted to be releasably coupled to a pipetting shaft of a pipetting system. A membrane is positioned within each of the generally cylindrical protrusions between the proximal end opening and the distal end opening, the membranes being gas permeable.

A method of pipetting a fluid sample first includes forming a multiple port pipette tip. Forming the multiple port pipette tip includes an elongate tubular body, a platform, a multitude of generally cylindrical protrusions, and a multitude of membranes. The pipette tip of the method is formed with the structure as described above.

In one step of the method, each of the generally cylindrical protrusions are releasably coupled to one of the pipetting shafts of the pipetting system, where the pipetting shafts may form an array of twenty-four pipetting shafts such that between one and six the of the described pipette tips may be attached. Each of the generally cylindrical protrusions or adapters are releasably coupled to the pipetting shafts via press-fitting.

In another step of the method, the distal tapered end opening of the elongate tube of the multiple port pipette tip is submerged into a fluid sample contained in a first vessel, drawing the fluid sample into the fluid cavity of the elongate tubular body using negative pressure created by an automated pipetting system. The first vessel of this step is a well plate, and the fluid sample of this step is comprised primarily of liquid.

In another step of the method, the fluid sample within the fluid cavity is transported from the first vessel to a second vessel by the automated pipetting system. The second vessel of this step is a well plate, and the fluid sample of this step is comprised primarily of liquid.

In another step of the method, the fluid sample is dispensed from the fluid cavity of the pipette tip into the second vessel using positive pressure created by the automated pipetting system. The second vessel of this step is a well plate, and the fluid sample of this step is comprised primarily of liquid.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is a top perspective view of the multiple port pipette tip;
Figure 2 is a side plan view of the multiple port pipette tip;
Figure 3 is an exploded top perspective view of the multiple port pipette tip;
Figure 4 is an exploded bottom perspective view of the multiple port pipette tip;
Figure 5 is a bottom plan view of the multiple port pipette tip;
Figure 6 is a top plan view of the multiple port pipette tip, depicting how the membranes fit within the adapters;
Figure 7 is a perspective view of several multiple port pipette tips as they coupled to the pipetting shafts of a pipetting system, in extended alignment above a well plate;
Figure 8 is a side plan view of the multiple port pipette tips coupled to the pipetting shafts of a pipetting system, in extended alignment above a well plate;
Figure 9 is a cross sectional view of the multiple port pipette tips of Figure 8, along line 9-9;
Figure 10 is a cross sectional view of the multiple port pipette tips as they are coupled to the pipetting shafts of a pipetting system, drawing up fluid into the pipette tips from a first well plate;
Figure 11 is the cross sectional view of Figure 10, the fluid within the pipette tips being transported from the first well plate; and
Figure 12 is the cross sectional view of Figure 11, the fluid within the pipette tips being dispensed into a second well plate.

### DETAILED DESCRIPTION

The detailed description set forth below in connection with the appended drawings is intended as a description of certain embodiments of a multiple port pipette tip and is not intended to represent the only forms that may be developed or utilized, nor are the described methods the only methods that could be employed. The description sets forth the various structure and/or functions in connection with the illustrated embodiments, but it is to be understood, however, that the same or equivalent structure and/or functions may be accomplished by different embodiments that are also intended to be encompassed within the scope of the present disclosure. It is further understood that the use of relational terms such as first and second, and the like are used solely to distinguish one entity from another without necessarily requiring or implying any actual such relationship or order between such entities.

In some embodiments, the numbers expressing dimensions, quantities, quantiles of ingredients, properties of materials, and so forth, used to describe and claim certain embodiments of the disclosure are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the disclosure are approximations, the numerical values set forth in the specific examples are reported as precisely as practicable. The numerical values presented in some embodiments of the disclosure may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

Unless the context dictates the contrary, all ranges set forth herein should be interpreted as being inclusive of their endpoints, and open-ended ranges should be interpreted to include commercially practical values. Similarly, all lists of values should be considered as inclusive of intermediate values unless the context indicates the contrary.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the disclosure and does not pose a limitation on the scope of the claimed inventive subject matter. No language in the specification should be construed as indicating any non-claimed element essential to the practice of the inventive subject matter.

Groupings of alternative elements or embodiments of the inventive subject matter disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all Markush groups used in the appended claims.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed. Various objects, features, aspects and advantages of the inventive subject matter will become more apparent from the following detailed description of preferred embodiments, along with the accompanying drawing figures in which like numerals represent like components.

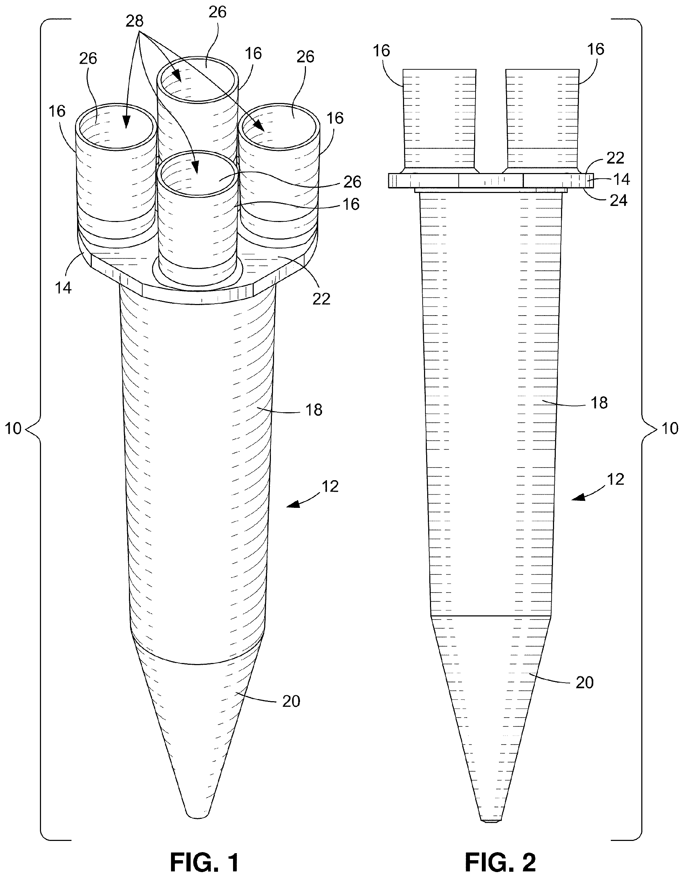

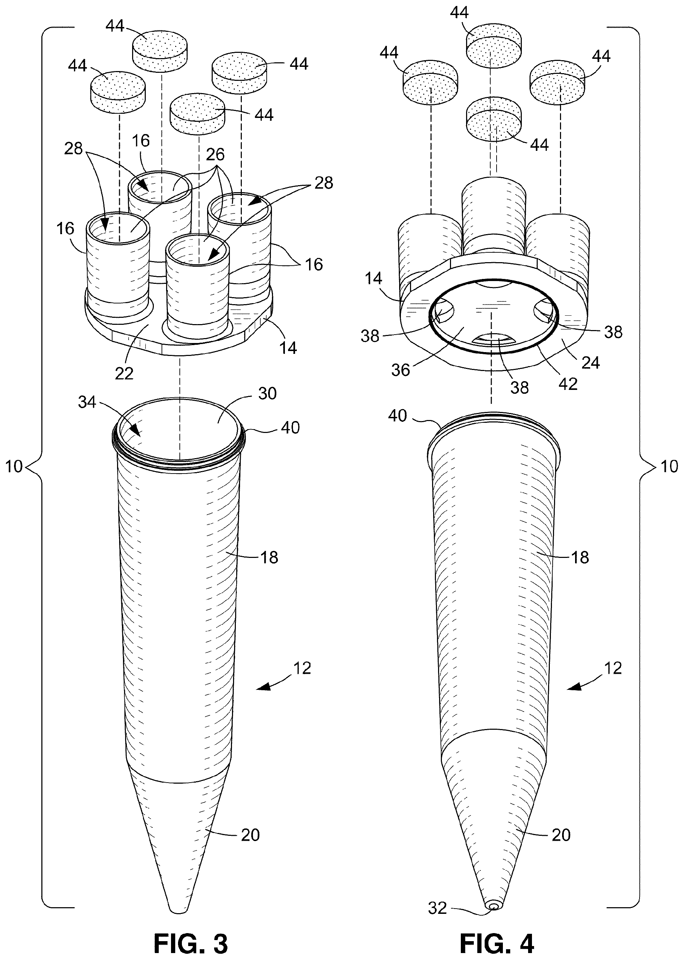

Referring now to Figures 1 and 2, a perspective view of a multiple port pipette tip 10 can be seen in Figure 1 and a side plan view of the multiple port pipette tip 10 can be seen in Figure 2. The general purpose of the multiple port pipette tip 10 is to measure and transfer a larger known volume of fluid than would be possible with a standard, single port pipette tip. The term fluid in this disclosure refers to a sample comprising primarily of liquid. The term sample in this disclosure refers to any substance of interest that was, is, or is an intermediate of a substance to be used in any experiment or standard operation within a laboratory setting. The multiple port pipette tip 10 generally consists of a tubular body 12, a platform 14, and a multitude of cylindrical protrusions or adapters 16. The tubular body 12 generally has a proximal cylindrical shaft 18 and then tapers into a distal frustoconical tip 20. The term proximal for purposes of this disclosure refers to the upper or top portion of an object or component closest where the device attaches to the pipetting shaft of a pipetting system and the term distal refers to the lower or bottom portion of an object or component closest to a well plate or other liquid container. The platform 14 generally has a proximal face 22 and a distal face 24 (seen in Figure 4), the distal face 24 being coupled to the proximal end of the cylindrical shaft 18 of the tubular body 12. The adapters 16 are generally cylindrically shaped and integrally formed to the proximal face 22 of the platform 14. Though the adapters 16 are integrally formed to the platform 14 in the present disclosure, another method of coupling the adapters 16 to the platform 14 known in the art may be used. The pipette tip 10 and its various parts may be made from polypropylene (PP), low density polyethylene (LDPE), or other like materials that are generally hydrophobic, chemically inert, and resistant to biodegradation. The pipette tip 10 and its various parts may be coated or treated to reduce sample adhesion to the interior of the pipette tip 10.

The adapters 16 have a proximal opening 26 and a distal opening, the distal opening being coupled to the proximal face 22 of the platform 14 and integral with the multitude of openings 38 shown in Figure 4. The interior space of the adapters 16 between the proximal opening 26 and the proximal face 22 of the platform 14 creates the interior cavity 28 of the adapters 16. The number of adapters 16 present for each multiple port pipette tip 10 in the present disclosure is four, but it has been contemplated that any number of adapters 16 greater than or equal to two may be used, as needed. As can be seen in Figures 1 and 2, the adapters 16 are placed symmetrically, each adapter 16 being equidistant from one another around the center of the proximal face 22 of the platform 14 in a two-by-two configuration. Though the adapters 16 are placed symmetrically in a two-by-two configuration in the present embodiment shown in the Figures, it has been contemplated that the adapters may be placed in any configuration, as needed. Although the adaptors 16 are formed from PP or LDPE, it is also contemplated by this disclosure that a portion of the adapters 16 may composed of a soft flexible material to enable conform to the shape of a pipetting shaft of a pipetting system.

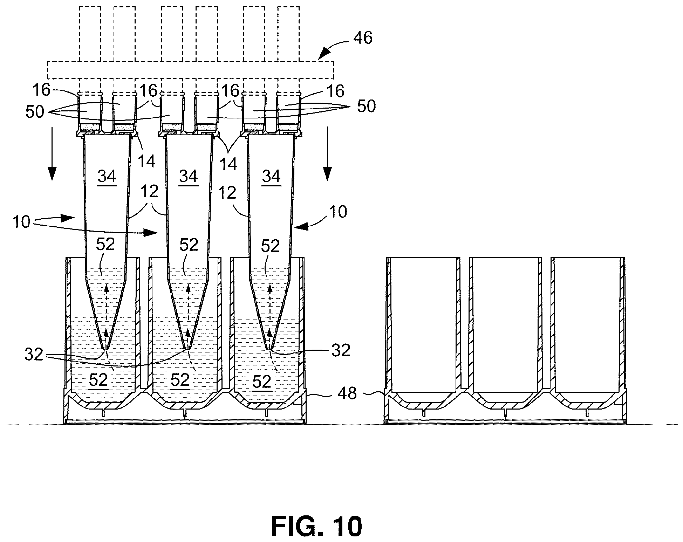

Turning now to Figures 3 and 4, an exploded top perspective view of the multiple port pipette tip 10 can be seen in Figure 3 and an exploded bottom perspective view of the multiple port pipette tip 10 can be seen in Figure 4. As can be seen in Figures 3 and 4, the tubular body 12 has a tube opening 30 on the proximal end of the cylindrical shaft 18 and a tip opening 32 on the distal end of the frustoconical tip 20. The interior of the tubular body 12, between the tube opening 30 and the tip opening 32, creates a fluid cavity 34 wherein a fluid may be drawn into and held within the multiple port pipette tip 10 for the purposes of pipetting. The mechanism of drawing up, holding, and dispensing fluid using the multiple port pipette tip 10 will be discussed further with regard to Figures 10-12 below.

As can be seen in Figure 4, the center of the distal face 24 of the platform 14 has a recessed inner portion or recessed inner face 36. Though a recessed inner face 36 is disclosed in the present embodiment shown in the Figures, it has been contemplated that the distal face 24 may also be planar. This recessed inner face 36 has a multitude of openings 38 extending through the proximal face 22, allowing for fluid communication through the platform 14 through these openings 38. Each opening 38 corresponds to a proximal opening 26 of each adapter 16, allowing for fluid communication from the interior cavities 28 of the adapters 16 through openings 38 of the platform 14. Though the openings 38 disclosed in the present embodiment shown in the Figures are on the recessed inner face 36, it has been contemplated that the openings 38 may also be located on a planar distal face 24. Though the number of openings 38 in the present embodiment shown in the Figures is four, it has been contemplated that any number of one or more openings 38 may be used, as needed. For example, one large opening 38 in the center of the distal face may be used, or a different number of openings 38 may be used to correspond to the number of adapters 16 present. The proximal end of the cylindrical shaft 18 around the tube opening 30 has threading 40 designed to be releasably securable to complementary threading 42 on the distal face 24 of the platform 14; the complementary threading 42 being located around the diameter of the recessed face 36. This threading 40 of the cylindrical shaft 18 and complementary threading 42 of the distal face 24 allows for the tubular body 12 to be releasably securable to the platform 14, allowing for the interior cavity 28 of the adapters 16 to be in fluid communication with the fluid cavity 34 within the tubular body 12 through the openings 38 in the platform 14. Though the present embodiment shown in the Figures discloses threading 40 on the cylindrical shaft 18 and complementary threading 42 on the distal face 24 for coupling the tubular body 12 to the platform 14, it has been contemplated that another method for coupling the tubular body 12 to the platform 14 may be used, such as integrally forming the tubular body 12 to the platform 14 or sonically welding the tubular body 12 to the distal face 24 of the platform 14.

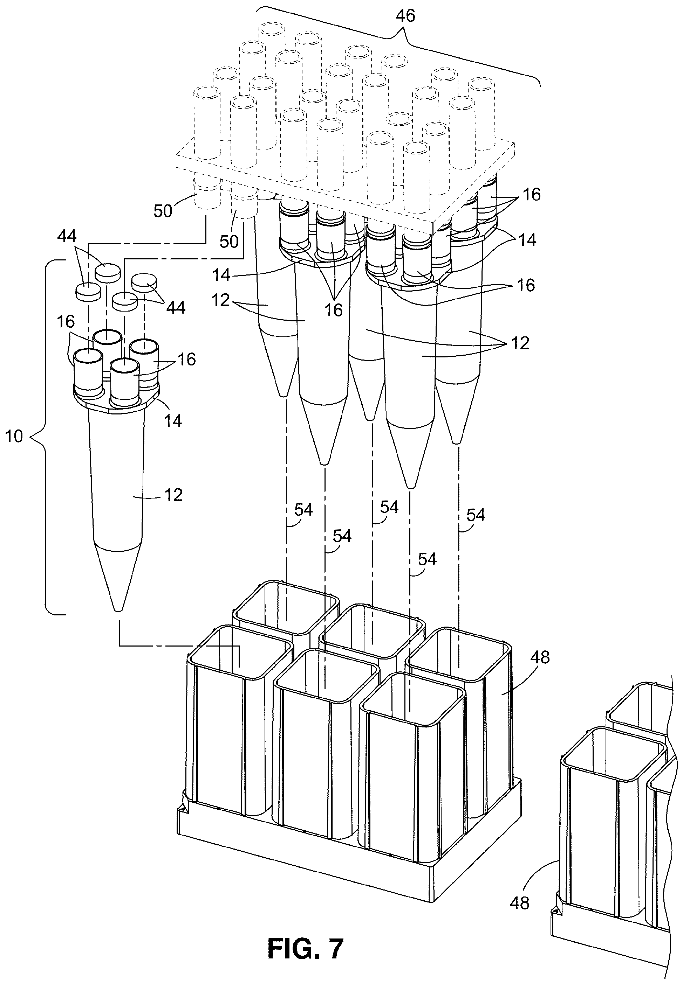

Additionally, Figures 3 and 4 depict the placement of the membranes 44 within the interior cavities 28 of each adapter 16. The membranes 44 are sized to fit snugly within the interior cavities 28 of each adapter 16, resting on the proximal face 22 of the platform 14. The membranes 44 and opening or openings 38 of the platform 14 are mutually sized as to not allow the membranes 44 to fall through the opening or openings 38. The membranes 44 and opening or openings 38 are sized as such to allow the membranes 44 to securely rest atop the proximal face 22 of the platform 14. In the case of the present embodiment shown in the Figures, four membranes 44 are present within each multiple port pipette tip 10 to correspond to the number of adapters 16 present in each multiple port pipette tip 10. The membranes 44 are present to prevent any fluid present in the fluid cavity 34 from passing through the adapters 16 into the mechanics of any pipetting system being used. The mechanism of how the multiple port pipette tip 10 interfaces with a pipetting system 46 (shown in Figure 7) will be discussed in further detail below. Because the membranes 44 are gas permeable, this allows the exchange of gas for increased and decreased pressure within the tubular body 12 as is supplied from a connected pipetting system shaft to permit the drawing up of liquid and dispensing of a liquid. The membranes 44 may be comprised of polyethylene, polypropylene, polydimethylsiloxane (PDMS) or other like material that is a barrier to liquid to prevent contamination of any automated pipette system shaft, but that allows a permeable path for gasses. Although the present disclosure contemplates that the membranes 44 have a depth as shown in the figures, it is also contemplated that the membranes 44 may comprise a single thin sheet membrane, layers of two or more membranes, a member affixed to an inert structure for positioning within adapters 16 or also may comprise two membranes with an inert structure sandwiched between membranes. Additionally, other configurations of the membranes 44 are contemplated by this disclosure, including but not limited to a membrane 44 configuration in which a single membrane 44 may rest atop or below more than one opening 38, such that the membrane 44 prevents contamination of more than one pipette system shaft.

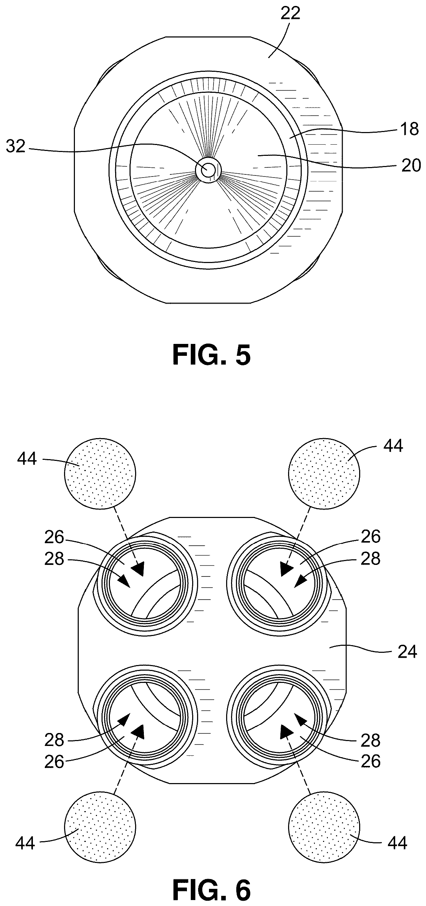

Turning now to Figures 5 and 6, a bottom plan view of the multiple port pipette tip 10 can be seen in Figure 5 and a top plan view of the multiple port pipette tip 10 can be seen in Figure 6. As demonstrated in Figure 6, the interior cavity 28 of each adapter 16 is in fluid communication with the fluid cavity 34 of the tubular body 12. Thus, shown in the combination of both Figures 5 and 6, there is fluid communication through the entirety of the multiple port pipette tip 10. The fluid communication extends from above the proximal opening 26 of each adapter 16, to the interior cavity 28, through each corresponding opening 38 in the platform 14, through the tube opening 30 of the tubular body 12, into the fluid cavity 34, and out of the multiple port pipette tip 10 through the tip opening 32. Though the mechanism of how fluid flows through the multiple port pipette tip 10 will be discussed in more detail below, gasses are able to flow through the entirety of the pipette tip 10, while liquids are designed to flow into and out of the fluid cavity 34 through the tip opening 32.

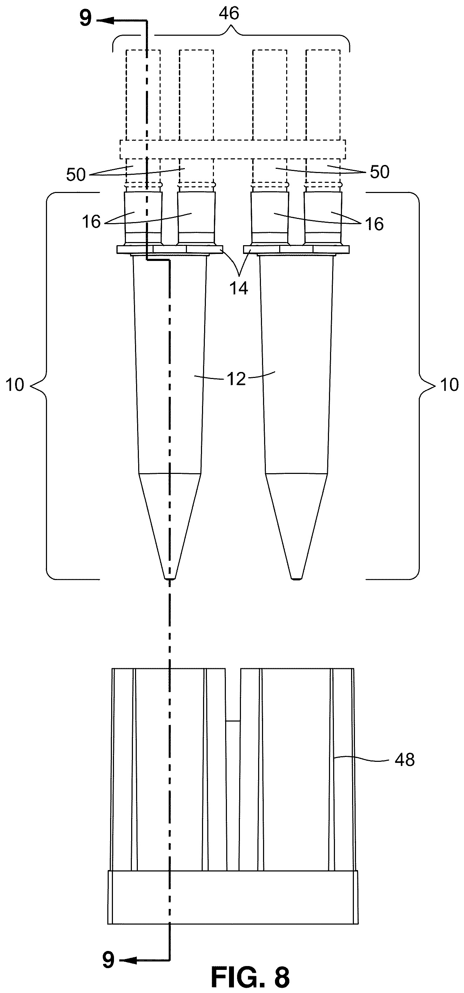

Turning now to Figures 7 and 8, several multiple port pipette tips 10 are shown as they are releasably coupled to a pipetting system 46, shown in extended positioning above a six well plate 48. In the standard use of a pipetting system 46 utilizing traditional pipette tips, one disposable pipette tip would be press fit on each pipetting shaft 50, each pipetting shaft 50 and corresponding disposable tip acting independently as one pipetting axis 54. The term pipetting axis 54 in the present disclosure defines a singular pipette tip and pipetting shaft or shafts 50 releasably coupled thereto, capable of pipetting fluid independently or within the matrix of the pipetting system 46 through which it operates. The multiple port pipette tips 10 of the present disclosure are releasably coupled to a pipetting system 46 by press-fitting each adapter 16 of each multiple port pipette tip 10 over a corresponding pipetting shaft 50. Each multiple port pipette tip 10 and multitude of corresponding pipetting shafts 50 releasably coupled thereto are acting as one pipetting axis 54. In the case of the present embodiment shown in the Figures, one multiple port pipette tip 10 releasably coupled to four corresponding pipetting shafts 50 comprises one pipetting axis 54.

The purpose of a multiple port pipette tip 10 releasably coupling to more than one pipetting shaft 50 is to increase the volume able to be pipetted by a single pipetting axis 54. The mechanism of pipetting will be discussed in more detail below. In the case of the present embodiment shown in the Figures, each of the four adapters 16 are press fit over four corresponding pipetting shafts 50, meaning that every four pipetting shafts 50 corresponds to one multiple port pipette tip 10. The pipetting system 46 depicted in the Figures has twenty-four pipetting shafts 50 in a four by six configuration, meaning that six multiple port pipette tips 10 may be releasably coupled to the pipetting system 46 in a two by three configuration. Though the present embodiment shown in the Figures depicts this specific configuration of six multiple port pipette tips 10, each having four adapters 16, releasably coupled to twenty-four pipetting shafts 50, this specific configuration is not the only acceptable configuration. It has been contemplated by this disclosure that any configuration of two or more pipetting shafts 50 may be used and any number of multiple port pipette tips 10 and corresponding adapters 16 may be used. The present embodiment shown in the Figures depicts an automated pipetting system, but it has been contemplated that any pipetting system or device 46 with more than one pipetting shaft 50 may be used, so long as the pipetting shafts 50 are compatible with the adapters 16 of the multiple port pipette tips 10.

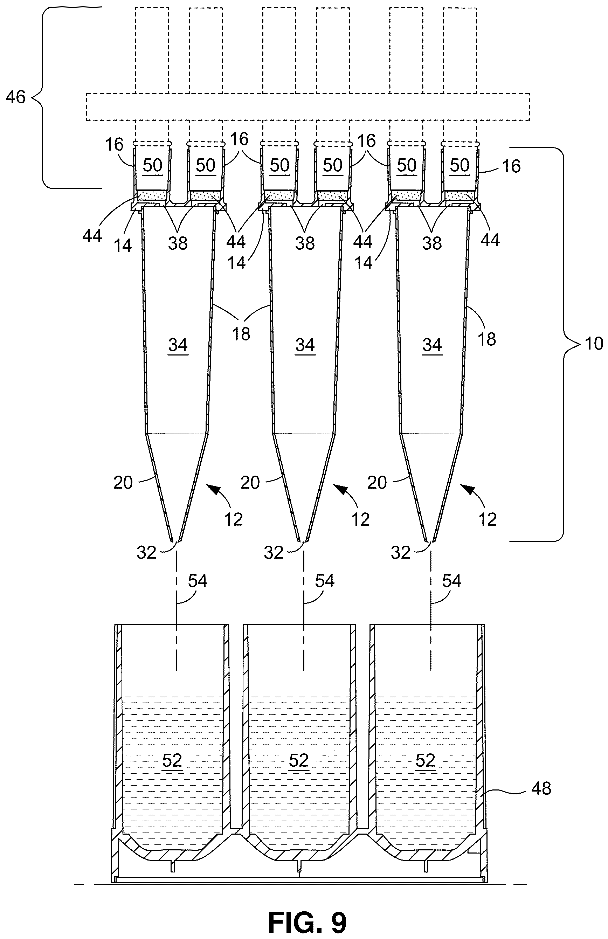

Turning now to Figures 9 to 12, the multiple port pipette tips can be seen in use. Figure 9 shows a cross sectional view of the multiple port pipette tips 10 as they are coupled to the pipetting system 46 and can be seen in extended positioning above a six well plate 48 along line 9-9 shown in Figure 8, each well of the well plate 48 containing a fluid sample 52. The fluid sample 52 is any fluid of interest that will be pipetted within a multiple port pipette tip 10. The fluid sample 52 can be any primarily liquid matter, the fluid sample 52 of the present disclosure being exemplary of any fluid that may be pipetted by the multiple port pipette tip 10. Though the present embodiment shown in the Figures depict a six well plate 48 as the vessel in which the fluid sample is disposed within prior to pipetting, any vessel known in the art may be used.

When in use, the multiple port pipette tips 10 are releasably coupled to the pipetting system 46 by press-fitting each adapter 16 onto a corresponding pipetting shaft 50. The distal end of the pipetting shafts 50 are disposed within the interior cavity 28 of each adapter 16, resting just above the membranes 44 disposed within the interior cavity 28. The coupling of the adapters 16 to the pipetting shafts 50 creates an air-tight seal within the interior cavity 28 of each adapter 16. In the case of the present embodiment shown in the Figures, one multiple port pipette tip 10 is coupled to four pipetting shafts 50, creating six pipetting axes 54, three of which can be seen in Figure 9. Each pipetting axis 54 is made up of one multiple port pipette tip 10 and four pipetting shafts 50, each axis 54 being able to pipette a fluid sample 52 independently of the other pipetting axes 54. With the multiple port pipette tip 10 coupled to the pipetting shafts 50, the pipetting system 46 is in fluid communication with the fluid cavity 34 of the tubular body 12 through the openings 38 of the platform 14 and is in fluid communication with any matter below the multiple port pipette tip 10 through the tip opening 32 of the tubular body 12.

Figure 10 shows the multiple port pipette tips 10 as they are releasably coupled to the pipetting system 46, being lowered into a first well plate 48 and drawing up the fluid sample 52 within. Once the multiple port pipette tips 10 are secured to the pipetting system 46, the tips 10 are lowered into the first well plate 48 with fluid sample 52 being disposed within each well. The distal end of each tubular body 12 is submerged within the fluid sample 52 within the well plate 48 deep enough for the tip openings 32 to be fully submerged within the fluid sample 52, but not so deep that the tip openings 32 are resting at the bottom of the wells. Next, the pipetting system 46 is activated, creating decreased pressure in the cavities 34, drawing the fluid sample 52 from the first well plate 48 into the fluid cavity 34 of the tubular body 12 through the tip opening 32. The mechanism used by the pipetting system 46 via each pipetting shaft 50 to draw the fluid sample 52 into the fluid cavity 34 may be any mechanism known in the art such as air displacement using internal pistons or negative vacuum pressure. The mechanism used to draw fluid sample 52 into the multiple port pipette tip 10 is carried out by each pipetting shaft 50 independently, each pipetting shaft 50 being configured to draw up a precise volume of liquid. In the present embodiment shown in the Figures, four pipetting shafts 50 each provide the requite negative pressure to draw the fluid sample 52 into a single pipette tip 10. The negative pressure setting for the automated pipette system shafts 50 are set in the automated device 46 and precise volume drawn into the pipette tip 10 by cumulating negative pressure of the four pipetting shafts 50 to determine the volume being pipetted. For example, if each of the four pipetting shafts 50 of a single pipetting axis 54 were configured to draw up 5 mL each, the multiple port pipette tip 10 cumulatively would be holding 20 mL. The volume of the cavity permits the settings to allow a maximum of 30 mL to be drawn into the cavity 34. However, the settings on the automated system may provide the negative pressure for lower volumes.

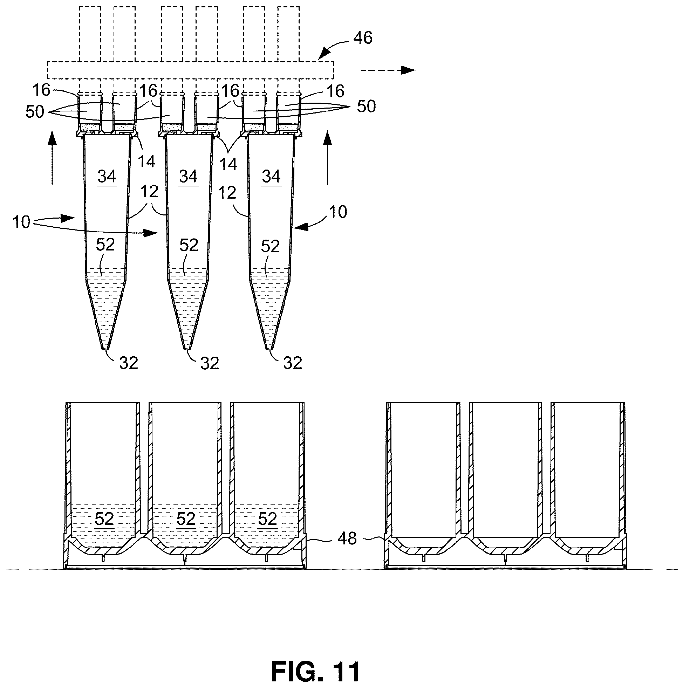

Figure 11 shows the multiple port pipette tips 10 coupled to the pipetting system 46 being raised out of the first well plate 48 and the fluid sample 52 within the pipette tips 10 being transported in the direction of the arrow, towards a second well plate 48. It is contemplated by the present disclosure that the movement of the pipetting system 46 may be achieved by the robotic movement of the pipetting system 46. Once the fluid sample 52 is drawn into the multiple port pipette tips 10, the fluid sample 52 is held within the fluid cavity 34 of the tubular body 12 so that the sample 52 may be transported to a second well plate 48. The fluid sample 52 is held within the fluid cavity 34 of the tubular body 12 by vacuumed air pressure lower than ambient air pressure and surface tension of the liquid is created by the mechanism used to draw the fluid sample 52 into the multiple port pipette tip 10. The pipetting system 46 and coupled multiple port pipette tips 10 containing the fluid sample are then transported to a different vessel in which the sample 52 will be dispensed. In the case of the present disclosure, the vessel in which the fluid sample 52 will be dispensed is a second well plate 48 but any vessel known in the art may be used.

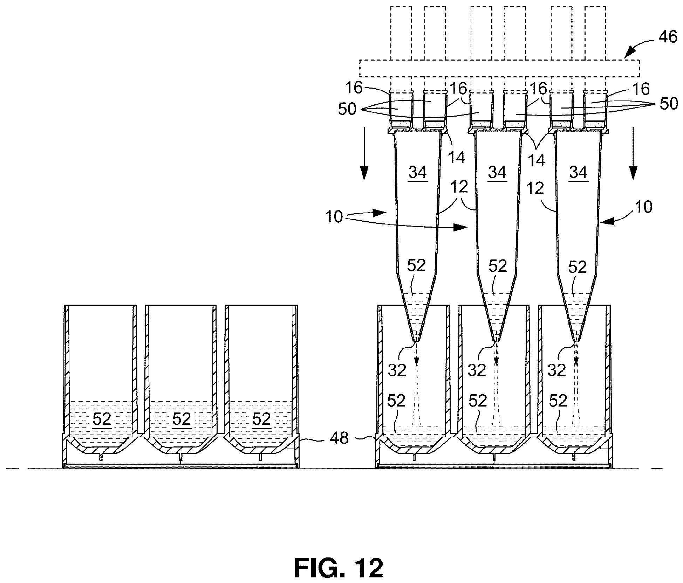

Figure 12 shows the multiple port pipette tips 10 coupled to the pipetting system 46 being lowered into a second well plate 48 and dispensing the fluid sample 52 held within the pipette tips 10. Once the pipetting system 46 and multiple port pipette tips 10 holding the fluid sample 52 are transported to the second well plate 48, the multiple port pipette tips 10 are lowered into the wells of the second well plate 48. The pipetting system 46 is then activated, dispensing the fluid sample 52 from the fluid cavities 34 of the tubular body 12 through the tip openings 32 into the wells of the second well plate 48. The mechanism used by the pipetting system 46 via each pipetting shaft 50 to dispense the fluid sample 52 from the fluid cavity 34 into the second well plate 48 may be any mechanism known in the art such as air displacement using internal pistons or positive vacuum pressure.

The above description is given by way of example, and not limitation. Given the above disclosure, one skilled in the art could devise variations that are within the scope and spirit of the subject matter disclosed herein, including various ways of manufacturing a multiple port pipette tip 10. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A multiple port pipette tip comprising:
an elongate tubular body having a proximal end having an opening and a distal tapered end having an opening;
a platform having a proximal face and opposed distal face and at least one opening formed in the platform, wherein the distal face is coupled to the proximal end of the tubular body such that the at least one opening is in fluid communication with the opening of the distal end of the tubular body;
at least two generally cylindrical protrusions, wherein the protrusions have a proximal end having an opening and a distal end having an opening wherein the distal ends are coupled to the proximal face such that the openings of the distal ends of the protrusions are in fluid communication with the platform opening; and
a membrane positioned within each of the at least two generally cylindrical protrusions between the proximal end opening and the distal end opening of the at least two cylindrical protrusions.

2. The multiple port pipette tip of claim 1, wherein the membrane is gas permeable.

3. The multiple port pipette tip of claim 1 or claim 2, wherein the membrane is liquid impermeable.

4. The multiple port pipette tip of any preceding claim, wherein the membrane is comprised of polydimethylsiloxane.

5. The multiple port pipette tip of any preceding claim, wherein the proximal end opening of the elongate tubular body is generally circular and having a first diameter, optionally wherein the distal end opening of the elongate tubular body is generally circular and having a second diameter, the second diameter being smaller than the first diameter.

6. The multiple port pipette tip of any preceding claim, wherein the platform further comprising a recessed portion, forming a recessed face.

7. The multiple port pipette tip of claim 6, wherein a plurality of openings are formed in the recessed face of the platform.

8. The multiple port pipette tip of any preceding claim, wherein the at least two cylindrical protrusions comprises an array of four generally cylindrical protrusions.

9. The multiple port pipette tip of any preceding claim, wherein:
(1) the elongate tubular body is coupled to the distal face of the platform via threading on the elongate tubular body surrounding the perimeter of the proximal end opening and complementary threading integrally formed within the platform around the perimeter of the recessed face;
(2) the elongate tubular body is coupled to the distal face of the platform via sonic welding; or
(3) the elongate tubular body and the platform are integrally formed.

10. The multiple port pipette tip of any preceding claim, wherein the distal ends of the at least two cylindrical protrusions are 1) integrally formed to the proximal face of the platform or 2) sonically welded to the proximal face of the platform.

11. The multiple port pipette tip of any preceding claim, wherein the opening of the proximal end of the at least two cylindrical protrusions are adapted to be releasably coupled to a pipetting shaft of a pipetting system.

12. The multiple port pipette tip of any preceding claim, wherein a maximum fluid capacity of the multiple port pipette tip is greater than 5 milliliters.

13. A method of pipetting a fluid sample comprising:
forming a multiple port pipette tip comprising:
an elongate tubular body having a proximal end having an opening and a distal tapered end having an opening, the interior of the elongate tubular body between the opening of the proximal end and the opening of the distal end comprising a fluid cavity;
a platform having a proximal face and opposed distal face and at least one opening formed in the platform, wherein the distal face is coupled to the proximal end of the tubular body such that the at least one opening is in fluid communication with the opening of the distal end of the tubular body;
at least two generally cylindrical protrusions, wherein the protrusions have a proximal end having an opening and a distal end having an opening wherein the distal ends are coupled to the proximal face such that the openings of the distal ends of the protrusions are in fluid communication with the platform opening, the proximal end being adapted to be coupled to a pipetting shaft of a pipetting system; and
positioning a membrane within each of the at least two generally cylindrical protrusions between the proximal end opening and the distal end
releasably coupling each of the at least two generally cylindrical protrusions to one of at least two pipetting shafts of a pipetting system;
submerging the distal tapered end opening of the elongate tube of the multiple port pipette tip into a fluid sample contained in a first vessel;
drawing the fluid sample into the fluid cavity of the elongate tubular body using negative pressure of the pipetting system;
transporting the fluid sample within the fluid cavity to a second vessel; and
dispensing the fluid sample from the fluid cavity into the second vessel using positive pressure of the pipetting system.

14. The method of claim 13, wherein the steps of submerging, transporting, and dispensing are accomplished using the robotic movement of an automated pipetting system, optionally wherein the step of releasable coupling of each of the at least two generally cylindrical protrusions to one of the at least two pipetting shafts of a pipetting system comprises press-fitting the at least two generally cylindrical protrusions to the at least two pipetting shafts.

15. The method of claim 13 or claim 14, wherein a maximum fluid capacity of the multiple port pipette tip is greater than or equal to a sum of a maximum amount of fluid able to be drawn by each of the at least two pipetting shafts.
